(19) Europäisches Patentamt
European Patent Office
Office européen des brevets

(11) EP 2 796 505 B1

(12) EUROPEAN PATENT SPECIFICATION

(45) Date of publication and mention of the grant of the patent:
**23.08.2017 Bulletin 2017/34**

(21) Application number: **12859761.4**

(22) Date of filing: **03.12.2012**

(51) Int Cl.:
***C08L 59/04*** *(2006.01)* ***C08K 3/22*** *(2006.01)*
***C08K 5/13*** *(2006.01)* ***C08K 5/24*** *(2006.01)*
***C08K 5/3435*** *(2006.01)* ***C08K 5/3492*** *(2006.01)*
***C08K 5/057*** *(2006.01)*

(86) International application number:
**PCT/JP2012/081281**

(87) International publication number:
**WO 2013/094393 (27.06.2013 Gazette 2013/26)**

# (54) RESIN COMPOSITION AND SHAPED ARTICLE

HARZZUSAMMENSETZUNG UND FORMKÖRPER

COMPOSITION DE RÉSINE ET ARTICLES MOULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 JP 2011279959**

(43) Date of publication of application:
**29.10.2014 Bulletin 2014/44**

(73) Proprietor: **Mitsubishi Gas Chemical Company, Inc.**
**Tokyo 100-8324 (JP)**

(72) Inventors:
- **NIUCHI, Mikihiro**
**Yokkaichi-shi**
**Mie 510-0886 (JP)**
- **ITO, Akira**
**Yokkaichi-shi**
**Mie 510-0886 (JP)**

(74) Representative: **Müller-Boré & Partner Patentanwälte PartG mbB**
**Friedenheimer Brücke 21**
**80639 München (DE)**

(56) References cited:
**JP-A- S6 363 741** **JP-A- H04 296 348**
**JP-A- H07 179 722** **JP-A- 2004 026 857**
**JP-A- 2004 522 810** **JP-A- 2006 111 874**
**JP-A- 2008 007 676** **JP-A- 2008 195 755**
**US-A- 4 751 272** **US-A1- 2009 312 466**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to a polyacetal copolymer resin composition and a shaped article obtained therefrom.

BACKGROUND ART

An oxymethylene polymer has excellent properties including excellent mechanical properties, thermal properties, electrical properties, sliding properties, and shapability, and has been widely used as, for example, structural materials and movement parts in, e.g., electric devices, automobile parts, and precision machine parts. As the fields in which the oxymethylene polymer is used are expanding, a further improvement of the properties of the oxymethylene polymer as a material used in such fields is demanded. Currently, in the market, there are supplies of oxymethylene polymers having excellent balance between the rigidity, toughness, and thermal stability.

It has been known that the molecular structure of the oxymethylene polymer has so poor thermal stability that depolymerization from the polymer end or cleavage of the principal chain due to a thermal oxidation reaction is likely to occur to cause the oxymethylene polymer to easily degrade. Further, formaldehyde generated due to the degradation undergoes an oxidation reaction to form formic acid, which promotes the thermal oxidative degradation reaction of the oxymethylene polymer, so that the polyoxymethylene polymer is markedly reduced in thermal stability and cannot be practically used. For this reason, studies have conventionally been made on the addition of various types of additives to the oxymethylene polymer for improving the oxymethylene polymer in thermal stability and suppressing the amount of formaldehyde generated from pellets or shaped articles containing the oxymethylene polymer.

Further, as the fields in which the oxymethylene polymer is used are diversified, e.g., water-related uses of the oxymethylene polymer are increasing, and the oxymethylene polymer is required to have high resistance to hydrolysis and color tone stability, particularly under severe conditions, e.g., at high temperatures. The oxymethylene polymer has drawbacks in that, for example, when used in a moist-heat atmosphere for a long period of time, a crack is caused to lower the mechanical properties, and a shaped article formed from the oxymethylene polymer becomes poor in surface appearance, for example, suffers discoloration, or causes dissolution of formaldehyde in hot water, and hence various formulations for stabilizers added to the oxymethylene polymer have conventionally been studied.

It is considered that, in a moist-heat atmosphere, an oxidative degradation of the oxymethylene polymer caused by formic acid formed due to an oxidation reaction of formaldehyde in the oxymethylene polymer and a hydrolysis of the formate ends in the oxymethylene polymer using a basic additive as a catalyst simultaneously proceed. Therefore, a problem is encountered in that when the amount of the basic additive is reduced, the oxidative degradation cannot be suppressed, and, when the basic additive is added for suppressing the oxidative degradation, the basic additive serves as a neutralizer for the acid component and disadvantageously also promotes a hydrolysis of the formate ends.

The addition of a hydrazide compound as a formaldehyde trapping agent, an amine-substituted triazine compound, a hindered phenol compound as an antioxidant, and a metal compound indicated by the group consisting of a hydroxide, an organic acid salt, and an inorganic acid salt of an alkali metal or an alkaline earth metal in an amount of 50 ppm by weight or less, in terms of the total of metals, has been proposed (see, for example, patent document 1). However, it is considered that, in a moist-heat atmosphere, an oxidative degradation of the oxymethylene polymer caused by formic acid formed due to an oxidation reaction of formaldehyde in the oxymethylene polymer and a hydrolysis of the formate ends in the oxymethylene polymer simultaneously proceed. Therefore, a problem arises in that when the amount of the basic additive is reduced, the oxidative degradation cannot be suppressed, and, when the basic additive is added for suppressing the oxidative degradation, the basic additive serves as a neutralizer for the acid component and disadvantageously also promotes a hydrolysis of the formate ends.

Further, there have been proposed a polyoxymethylene resin composition which contains a hindered phenol antioxidant having a molecular weight of 400 or more, a metal salt of a saturated fatty acid having a hydroxyl group, and a polyamide 6/66/610/12 tetracopolymer, and which has good colorability and suppresses the amount of formaldehyde generated, and a shaped article obtained from the resin composition (see, for example, patent document 2). However, these techniques are mainly intended to be applied to automobile interior parts, parts for household appliances or parts for precision electric or electronic devices, interior functioning parts for offices, office buildings, detached houses, and apartment houses, and decorative part uses, and have no description clearly showing the resistance to moisture and heat and resistance to hydrolysis of the composition.

PRIOR ART REFERENCES

Patent Documents

Patent document 1: Japanese Laid-open Patent [Kokai] Publication No. 2006-111874
Patent document 2: Japanese Laid-open Patent [Kokai] Publication No. 2005-220254

DISCLOSURE OF THE INVENTION

PROBLEMS TO BE SOLVED BY THE INVENTION

An object of the present invention is to provide a resin composition and a shaped article obtained therefrom, which are advantageous not only in that they have practically satisfactory heat resistance, mechanical properties, and shapability as well as excellent resistance to moisture and heat, but also in that both the suppression of the amount of formaldehyde generated and high resistance to moisture and heat, which are contradictory properties, can be achieved.

MEANS TO SOLVE THE PROBLEMS

The present inventors have conducted extensive and intensive studies with a view toward solving the above-mentioned problems. As a result, it has been found that by incorporating, into a specific polyacetal copolymer, an amine-substituted triazine compound, a hindered phenol, a hindered amine, and at least one metal-containing compound selected from the group consisting of a hydroxide, an inorganic acid salt, and an alkoxide of an alkali metal or an alkaline earth metal in a specific formulation, there can be obtained a polyacetal resin composition which can suppress the amount of formaldehyde generated and which is remarkably improved in the resistance to moisture and heat, and the present invention has been completed.

Specifically, the present invention is a polyacetal resin composition which comprises 100 parts by weight of (A) a polyacetal copolymer, wherein the amount of oxyalkylene units contained in the polyacetal copolymer is, per 100 mol of oxymethylene units of the polyacetal copolymer, 0.4 to 17.0 mol, relative to 100 parts by weight of the polyacetal copolymer (A), 0.01 to 1.0 part by weight of (B) an amine-substituted triazine compound, 0.01 to 5.0 parts by weight of (C) a hindered phenol, 0.001 to 3.0 parts by weight of (D) a hindered amine, and 0.001 to less than 0.005 part by weight of (E) at least one metal-containing compound selected from the group consisting of a hydroxide, an inorganic acid salt, and an alkoxide of an alkali metal or an alkaline earth metal.

Particularly, the present invention is the polyacetal resin composition wherein 0.001 to 0.2 part by weight of the hindered amine (D) and 0.001 to 0.003 part by weight of the metal-containing compound (E) are incorporated, the polyacetal resin composition wherein the hindered amine (D) has a partial structure represented by the structural formula (1) or (2) below, the polyacetal resin composition wherein the polyacetal copolymer (A) has a formate end-group content of 5 to 25 μmol/g-POM, the polyacetal resin composition wherein the polymerization yield of the polyacetal copolymer (A) is 80.0 to 99.9% by weight, and the polyacetal resin composition which further comprises 0.01 to 0.5 part by weight of (F) a hydrazide compound.

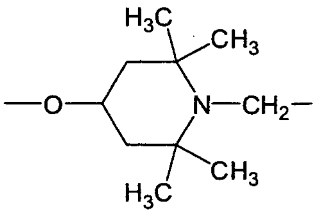

(1)

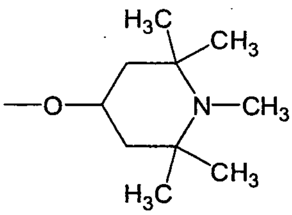

(2)

Further, the present invention is a shaped article obtained by shaping the above-mentioned polyacetal resin composition, particularly, the shaped article which is a shaped part for water-related use or a moist-heat resistant shaped part.

EFFECT OF THE INVENTION

The polyacetal resin composition of the present invention is advantageous not only in that the resistance to moisture and heat in a moist-heat atmosphere is remarkably improved, but also in that the amount of formaldehyde generated is markedly reduced, and thus the polyacetal resin composition suppresses the amount of formaldehyde dissolved in water or hot water. Therefore, the polyacetal resin composition of the present invention is advantageously used as a material for sanitary products used in, e.g., a bathroom or lavatory, and parts for water-related use and moist-heat resistant shaped parts used in devices for water-related use, such as a pipe, a valve part, a gear, a cam part, and a water guide member, and further as a material for, e.g., food or medical equipment and containers, and a material for an anti-freeze resistive shaped part for use in, e.g., an automobile radiator tank.

BEST MODE FOR CARRYING OUT THE INVENTION

The present invention is a polyacetal resin composition obtained by incorporating, into a polyacetal copolymer (A) having oxyalkylene units in a specific amount, specific amounts of specific four types of additives which function as stabilizers, i.e., an amine-substituted triazine compound (B), a hindered phenol (C), a hindered amine (D), and at least one metal-containing compound (E) selected from the group consisting of a hydroxide, an inorganic acid salt, and an alkoxide of an alkali metal or an alkaline earth metal.

In the resin composition of the present invention, polyacetal copolymer (A) is a polyacetal copolymer comprising oxymethylene units as basic units and oxyalkylene units having 2 or more carbon atoms as copolymerized units. With respect to the comonomer component constituting the oxyalkylene units having 2 or more carbon atoms in polyacetal copolymer (A), there is no particular limitation as long as the comonomer component is a cyclic ether, a glycidyl ether compound, or a cyclic formal. However, a comonomer component having 2 to 10 carbon atoms is preferably used, for example, there is used at least one comonomer component selected from ethylene oxide, propylene oxide, butylene oxide, styrene oxide, methyl glycidyl ether, ethyl glycidyl ether, phenyl glycidyl ether, 1,3-dioxolane, propylene glycol formal, diethylene glycol formal, triethylene glycol formal, 1,4-butanediol formal, 1,5-pentanediol formal, and 1,6-hexanediol formal, preferably, ethylene oxide, 1,3-dioxolane, diethylene glycol formal, or 1,4-butanediol formal is used, especially preferably, 1,3-dioxolane is used. The polyacetal copolymer is obtained by subjecting the above-mentioned comonomer component constituting the oxyalkylene units having 2 or more carbon atoms and a component constituting the oxymethylene units, for example, 1,3,5-trioxane, which is a cyclic trimer of formaldehyde, to copolymerization in the presence of a cationic polymerization catalyst. The amount of the comonomer contained is, relative to 100 parts by weight of trioxane, 1 to 50 parts by weight, preferably 1 to 19 parts by weight, more preferably 1 to 13 parts by weight. The amount of the oxyalkylene units having 2 or more carbon atoms contained in the polyacetal copolymer is, per 100 mol of oxymethylene units of the polyacetal copolymer, 0.4 to 17.0 mol, preferably 0.4 to 7.0 mol, more preferably 0.4 to 5.0 mol.

As a polymerization catalyst, a general cationically active catalyst is used. Examples of such cationically active catalysts include Lewis acids, particularly, halides of boron, tin, titanium, phosphorus, arsenic, or antimony, e.g., boron trifluoride, tin tetrachloride, titanium tetrachloride, phosphorus pentachloride, phosphorus pentafluoride, arsenic pentafluoride, and antimony pentafluoride, and complex compounds and salts thereof; protonic acids, e.g., trifluoromethanesulfonic acid and perchloric acid; protonic acid esters, particularly, an ester of perchloric acid and a lower aliphatic alcohol; protonic acid anhydrides, particularly, a mixed anhydride of perchloric acid and a lower aliphatic carboxylic acid; and triethyloxonium hexafluorophosphate, triphenylmethylium hexafluoroarsenate, acetyl hexafluoroborate, heteropolyacids and acidic salts thereof, and isopolyacids and acidic salts thereof. Particularly, preferred are compounds containing boron trifluoride, or boron trifluoride hydrate and coordination complex compounds, and especially preferred are boron trifluoride diethyl etherate and boron trifluoride dibutyl etherate which are coordination complexes with an ether.

The amount of the polymerization catalyst used is, relative to 1 mol of the total of the monomers, i.e., trioxane and the comonomer, generally in the range of from $1.0 \times 10^{-7}$ to $2.0 \times 10^{-3}$ mol, preferably $1.0 \times 10^{-7}$ to $8.0 \times 10^{-4}$ mol, more preferably $1.0 \times 10^{-7}$ to $1.0 \times 10^{-4}$ mol.

In the present invention, for example, the catalyst amount and reaction time are controlled so that the polymerization yield generally reaches 90% or more, preferably 95% or more, more preferably 97% or more. For dispersing the above-mentioned catalyst uniformly in the reaction system, it is preferred that the catalyst is used in the form of being diluted with an organic solvent which does not adversely affect the polymerization reaction. Examples of the organic solvents include ethers, such as ethylene glycol dimethyl ether, diethylene glycol dimethyl ether, and n-butyl ether; aromatic hydrocarbons, such as benzene and toluene; aliphatic hydrocarbons, such as n-hexane and cyclohexane; and

hydrocarbon halides, such as methylene dichloride and ethylene dichloride.

The polymerization method for obtaining the polyacetal copolymer can be conducted using the similar apparatus and by the similar method to those used for a conventionally known copolymerization of trioxane. Specifically, the polymerization method can be conducted in any of a batchwise manner and a continuous manner, and can be applied to a bulk polymerization method or a polymerization method which is performed in the presence of an organic solvent, such as cyclohexane. In a polymerization method in a batchwise manner, a reaction vessel equipped with a stirrer can be used. In a bulk polymerization method in a continuous manner, an apparatus having the ability to strongly stir so as to deal with vigorous solidification or heat generation caused during the polymerization and to accurately control the temperature, and further having a self-cleaning function to prevent the deposition of scales, for example, a kneader, a twin-screw continuous extruding kneader, or a two-shaft paddle-type continuous mixer is preferably used.

Further, in the polymerization, for controlling the molecular weight of the polymer produced, a low molecular-weight acetal compound is generally used. As such an acetal compound, for example, methylal, methoxymethylal, dimethoxymethylal, trimethoxymethylal, or oxymethylene di-n-butyl ether is used, but the acetal compound is not limited to these compounds. Generally, methylal is preferably used. Generally, according to the intended molecular weight, the amount of the acetal compound added is controlled to be in the range of from 0 to 0.1% by weight, based on the total weight of the monomers.

For terminating the polymerization reaction, a deactivator selected from trivalent organophosphorus compounds, amine compounds, and hydroxides of an alkali metal or an alkaline earth metal or a mixture of two or more deactivators can be used. A deactivation treatment for the catalyst and polymerization propagation end is conducted by a known method using a deactivator as such or in the form of an aqueous solution or organic solution thereof. Among the above deactivators, preferred are trivalent organophosphorus compounds, tertiary amines, and hindered amines. Especially when a hindered amine is used in the deactivation treatment for the polymerization, a similar effect to that of the hindered amine added as a stabilizer for the polyacetal copolymer as component (A) is expected, and therefore the amount of the hindered amine used as a deactivator is considered as the amount of the below-mentioned component (D) incorporated.

With respect to the amount of the deactivator used, there is no particular limitation as long as the amount is sufficient to deactivate the catalyst, but the deactivator is used in such an amount that the molar ratio of the deactivator to the catalyst is in the range of from $1.0 \times 10^{-1}$ to $1.0 \times 10^{1}$. When subjected to deactivation treatment for the polymerization, the polyacetal copolymer is preferably in a finely pulverized form, and the polymerization reactor used preferably has a function of satisfactorily pulverizing a bulk polymer. When the polyacetal copolymer obtained after the polymerization is not in a finely pulverized form, the catalyst contained in the polymer is not satisfactorily deactivated, so that the remaining catalyst having an activity causes depolymerization to slowly proceed, reducing the molecular weight of the polymer. Therefore, the polyacetal copolymer obtained after the polymerization may be pulverized separately using a pulverizer, followed by addition of a deactivator, or the polyacetal copolymer obtained after the polymerization may be pulverized and stirred simultaneously in the presence of a deactivator.

The polyacetal copolymer, which has been subjected to deactivation treatment for the polymerization, is mixed with components (B) to (E) in the present invention as stabilizers, and then the resultant mixture is molten by means of a twin-screw extruder, and the mixture in the molten state is continuously introduced to a two-shaft, surface renewal-type horizontal kneader and subjected to vacuum devolatilization at a temperature of the melting point of the copolymer or higher to effect a stabilization treatment. When further purification is needed, the resultant mixture can be subjected to, e.g., washing, separation or recovery of unreacted monomers, and drying.

The above-mentioned vacuum devolatilization in the two-shaft, surface renewal-type horizontal kneader is performed under a pressure of $1.01 \times 10^{2}$ to $1.33 \times 10^{-2}$ kPa while melt-kneading the mixture. When the pressure is higher than the above range, a satisfactory devolatilization effect cannot be obtained. On the other hand, when the pressure is lower than the above range, a large-sized vacuum system is inevitably needed, increasing the cost for the installation of the system. The time for vacuum devolatilization is preferably 15 to 60 minutes. When the time for vacuum devolatilization is less than 15 minutes, formaldehyde gas generated from the treated polyacetal copolymer upon melting cannot be satisfactorily devolatilized. Further, when the residence time is more than 60 minutes even in the two-shaft, surface renewal-type horizontal kneader having a shear stress even lower than that of an extruder, a disadvantage is caused in that the polyacetal copolymer suffers yellowing or is reduced in thermal stability due to the decomposition of principal chain of the copolymer. In the vacuum devolatilization, it is preferred that an inert gas, such as nitrogen gas, or, for example, an alcohol or water, which is vaporized under the reduced pressure conditions for devolatilization, is introduced into the vacuum treatment system to prevent air from mixing thereinto from the outside, or the degree of vacuum is appropriately controlled.

The internal resin temperature in the two-shaft, surface renewal-type horizontal kneader during the vacuum devolatilization treatment is preferably 190 to 240°C. When the temperature is too low, the molten polyacetal copolymer may be disadvantageously crystallized (solidified). On the other hand, when the temperature is too high, a disadvantage is caused in that the polyacetal copolymer suffers yellowing or is reduced in thermal stability due to the decomposition

of principal chain of the polymer caused by heat.

With respect to the two-shaft, surface renewal-type horizontal kneader, preferred is a kneader having a satisfactorily large clearance between an agitating blade and an inner diameter of the kneader, and being of a type such that a space volume in the kneader (space portion excluding the volume occupied by the molten polyacetal copolymer) can be 20% or more of the total volume to achieve excellent surface renewal properties, and examples include a spectacle-shaped blade, lattice blade type reactor, manufactured by Hitachi, Ltd., an SCR, NSCR type reactor, manufactured by Mitsubishi Heavy Industries, Ltd., and a KRC kneader, SC processor, manufactured by Kurimoto, Ltd.

In a moist-heat atmosphere, formate ends in the polyacetal copolymer undergo a hydrolysis to generate formaldehyde. The hydrolysis of formate ends proceeds using a basic additive as a catalyst. Therefore, by reducing the amount of the basic additive used, the hydrolysis of formate ends can be suppressed, making it possible to reduce the amount of formaldehyde generated. On the other hand, the basic additive suppresses an oxidative degradation of the polyacetal copolymer caused by formic acid formed due to an oxidation reaction of formaldehyde in the polyacetal copolymer. Therefore, it is considered that, in a moist-heat atmosphere, there is a need to add an optimum amount of a basic compound to the polyacetal copolymer having a specific formate end-group content, and, with respect to the polyacetal copolymer having a formate end-group content of 5 to 25 μmol/g-POM, the formulation for stabilizers in the present invention exhibits a remarkable effect.

With respect to amine-substituted triazine compound (B) which is one of the stabilizers in the present invention, specific examples include guanamine, melamine, N-butylmelamine, N-phenylmelamine, N,N-diphenylmelamine, N,N-diallylmelamine, N,N',N"-triphenylmelamine, N,N',N"-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, ammeline(2,4-diamino-6-hydroxy-sym-triazine), N,N,N',N'-tetracyanoethylbenzoguanamine, and prepolycondensates of the above compound and formaldehyde. Among these amine-substituted triazine compounds, especially preferred are melamine, methylolmelamine, benzoguanamine, and a water-soluble melamine-formaldehyde resin. The amount of amine-substituted triazine compound (B) incorporated in the present invention is, relative to 100 parts by weight of polyacetal copolymer (A) component, preferably 0.01 to 1.0 part by weight.

Hindered phenol compound (C), which is one of the stabilizers in the present invention, is incorporated as an antioxidant. With respect to the hindered phenol compound, there is no particular limitation, but preferred examples of hindered phenol compounds include 1,6-hexanediol bis-[3-(3,5-di-t-butyl-4-hydroxyphenyl)propionate], pentaerythrityl tetrakis[3-(3,5-di-t-butyl-4-hydroxyphenyl)propionate], triethylene glycol bis[3-(3-t-butyl-5-methyl-4-hydroxyphenyl)propionate], triethylene glycol bis[3-(3,5-di-t-butyl-4-hydroxyphenyl)propionate], and 2,2'-thiodiethyl bis-[3-(3,5-di-t-butyl-4-hydroxyphenyl)propionate]. The above hindered phenol compounds (C) may be used individually or in combination. The amount of hindered phenol compound (C) incorporated is, relative to 100 parts by weight of polyacetal copolymer (A) component, preferably 0.01 to 5.0 parts by weight, more preferably 0.01 to 2.0 parts by weight.

With respect to hindered amine (D) which is one of the stabilizers in the present invention, specific examples include bis(1,2,2,6,6-pentamethyl-4-piperidyl) sebacate, methyl 1,2,2,6,6-pentamethyl-4-piperidyl sebacate, bis(2,2,6,6-tetramethyl-4-piperidyl) sebacate, bis(1,2,2,6,6-pentamethyl-4-piperidyl) 2-(3,5-di-t-butyl-4-hydroxybenzyl)-2-N-butylmalonate, N,N'-bis(2,2,6,6-tetramethyl-4-piperidyl)-N,N'-diformylhexamethylenediamine, a polycondensation product of dimethyl succinate and 1-(2-hydroxyethyl)-4-hydroxy-2,2,6,6=tetramethylpiperidine, poly[{6-(1,1,3,3-tetramethylbutyl)amino-1,3,5-triazin-2,4-diyl} {(2,2,6,6-tetramethyl-4-piperidyl)imino}hexamethylene{(2,2,6,6-tetramethyl-4-piperidyl)imino}], a condensation product of N,N'-bis(3-aminopropyl)ethylenediamine and 2,4-bis[N-butyl-N-(1,2,2,6,6-pentamethyl-4-piperidyl)amino]-6-chloro-1,3,5-triazine, a polycondensation product of dibutylamine, 1,3,5-triazine, N,N'-bis(2,2,6,6-tetramethyl-4-piperidyl-1,6-hexamethylenediamine), and N-(2,2,6,6-tetramethyl-4-piperidyl)butylamine, and an olefin (C20-C24)-maleic anhydride-4-amino-2,2,6,6-tetramethylpiperidine copolymer.

Of these, preferred are bis(1,2,2,6,6-pentamethyl-4-piperidyl) sebacate, methyl 1,2,2,6,6-pentamethyl-4-piperidyl sebacate, bis(2,2,6,6-tetramethyl-4-piperidyl) sebacate, bis(1,2,2,6,6-pentamethyl-4-piperidyl) 2-(3,5-di-t-butyl-4-hydroxybenzyl)-2-N-butylmalonate, N,N'-bis(2,2,6,6-tetramethyl-4-piperidyl)-N,N'-diformylhexamethylenediamine, a polycondensation product of dimethyl succinate and 1-(2-hydroxyethyl)-4-hydroxy-2,2,6,6-tetramethylpiperidine, poly[{6-(1,1,3,3-tetramethylbutyl)amino-1,3,5-triazin-2,4-diyl} {(2,2,6,6-tetramethyl-4-piperidyl)imino}hexamethylene{(2,2,6,6-tetramethyl-4-piperidyl)imino}], and a condensation product of N,N'-bis(3-aminopropyl)ethylenediamine-2,4-bis[N-butyl-N-(1,2,2,6,6-pentamethyl-4-piperidyl)amino]-6-chloro-1,3,5-triazine.

With respect to hindered amine (D) incorporated in the present invention, the hindered amine having a partial structure represented by the above-shown structural formula (1) or (2) is more preferably used. With respect to hindered amine (D) incorporated in the present invention, the above hindered amines may be used individually or in combination. The amount of the hindered amine incorporated is, relative to 100 parts by weight of polyacetal copolymer (A) component, 0.001 to 3.0 parts by weight, preferably 0.001 to 1.0 part by weight, more preferably 0.001 to 0.2 part by weight.

When hindered amine (D) and a specific amount of at least one metal-containing compound (E) selected from the group consisting of a hydroxide, an inorganic acid salt, and an alkoxide of an alkali metal or an alkaline earth metal

are used in combination, a more excellent effect to improve the resistance to moisture and heat can be achieved. When the amount of metal-containing compound (E) in the polyacetal resin composition is smaller than the specific amount, formaldehyde in the polyacetal resin composition suffers an oxidation reaction to form formic acid, and hence an oxidative degradation of the polyacetal copolymer proceeds to generate formaldehyde, so that a desired effect aimed at by adding hindered amine (D) cannot be obtained. On the other hand, when the amount of metal-containing compound (E) in the polyacetal resin composition is larger than the specific amount, a hydrolysis of formate ends in the polyacetal copolymer proceeds, so that a desired effect aimed at by adding hindered amine (D) cannot be obtained.

With respect to at least one metal-containing compound (E) selected from the group consisting of a hydroxide, an inorganic acid salt, and an alkoxide of an alkali metal or an alkaline earth metal, which is one of the stabilizers in the present invention, examples of alkali metal hydroxides and alkaline earth metal hydroxides include sodium hydroxide, potassium hydroxide, calcium hydroxide, and magnesium hydroxide. Examples of inorganic salts include carbonates, phosphates, silicates, and borates. Examples of alkoxides include methoxides and ethoxides. The amount of metal-containing compound (E) incorporated into the polyacetal resin composition of the present invention is, relative to 100 parts by weight of polyacetal copolymer (A) component, 0.001 to less than 0.005 part by weight, preferably 0.001 to 0.003 part by weight. When the amount of metal-containing compound (E) incorporated is less than 0.001 part by weight, there is a possibility that the resistance to moisture and heat becomes poor. When the amount of metal-containing compound (E) incorporated is more than or equal to 0.005 part by weight, the amount of formaldehyde generated is increased. The amount of formaldehyde generated is markedly increased especially in a moist-heat atmosphere.

In the polyacetal resin composition of the present invention, as a formaldehyde trapping agent, hydrazide compound (F) can be incorporated. With respect to hydrazide compound (F), any of aliphatic and aromatic hydrazide compounds can be used.

Examples of aliphatic hydrazide compounds include propionic hydrazide, an aliphatic thiocarbohydrazide, and dihydrazide compounds, such as oxalic dihydrazide, malonic dihydrazide, succinic dihydrazide, glutaric dihydrazide, adipic dihydrazide, sebacic dihydrazide, dodecanedioic dihydrazide, 1,18-octadecanedicarbohydrazide, maleic dihydrazide, fumaric dihydrazide, and 7,11-octadecanediene-1,18-dicarbohydrazide.

Examples of aromatic hydrazide compounds include salicylic hydrazide, terephthalic dihydrazide, 3-hydroxy-2-naphthoic hydrazide, p-toluenesulfonyl hydrazide, aminobenzhydrazide, 4-pyridinecarboxylic hydrazide, 1,5-naphthalenedicarbohydrazide, 1,8-naphthalenedicarbohydrazide, 2,6-naphthalenedicarbohydrazide, an aromatic thiocarbohydrazide, 4,4'-oxybisbenzenesulfonyl hydrazide, and 1,5-diphenylcarbonodihydrazide. Further, a polyhydrazide, such as aminopolyacrylamide or 1,3,5-tris(2-hydrazinocarbonylethyl) isocyanurate, can be used.

Of these hydrazide compounds, preferred are dihydrazide compounds. Among the dihydrazide compounds, especially preferred are adipic dihydrazide, sebacic dihydrazide, dodecanedioic dihydrazide, 1,18-octadecanedicarbohydrazide, terephthalic dihydrazide, 1,8-naphthalenedicarbohydrazide, and 2,6-naphthalenedicarbohydrazide.

The above-mentioned hydrazide compounds (F) may be used individually or in combination. The amount of hydrazide compound (F) incorporated into the polyacetal resin composition of the present invention is, relative to 100 parts by weight of polyacetal copolymer (A) component, 0.01 to 0.5 part by weight, preferably 0.02 to 0.4 part by weight, further preferably 0.03 to 0.3 part by weight. When the amount of the hydrazide compound used is 0.01 part by weight or more, the formaldehyde trapping effect obtained by components (B) to (E) in the present invention as the stabilizers can be improved. However, when the amount of the hydrazide compound used is more than 0.5 part by weight, not only is the formaldehyde trapping effect rather lowered, but also a marked increase of mold deposits is caused.

In the polyacetal resin composition of the present invention, as a release agent, a higher fatty acid amide having a long chain having 10 or more carbon atoms is preferably incorporated. With respect to the higher fatty acid amide having a long chain having 10 or more carbon atoms, there is no particular limitation, but preferred examples include stearic amide, ethylenebisstearamide, methylenebisstearamide, methylenebislauramide, palmitic amide, oleic amide, and combinations thereof. Of these, more preferred are ethylenebisstearamide, methylenebisstearamide, methylenebislauramide, and combinations thereof. The amount of the higher fatty acid amide incorporated is, relative to 100 parts by weight of polyacetal copolymer (A) component, preferably 0.01 to 5 parts by weight, more preferably 0.01 to 3 parts by weight.

In the polyacetal resin composition of the present invention, as another release agent, for example, polyalkylene glycol, a paraffin wax, or a fatty acid ester of polyhydric alcohol may be added. With respect to the polyalkylene glycol, paraffin wax, and fatty acid ester of polyhydric alcohol, there is no particular limitation, but preferred are polyalkylene glycols, such as polyethylene glycol and polypropylene glycol, and fatty acid esters of polyhydric alcohol, e.g., behenic acid, cerotic acid, montanic acid, or lacceric acid ester of glycerol, diglycerol, pentaerythritol, sorbitan, ethylene glycol, diethylene glycol, trimethylolmethane, or trimethylolethane. The amount of the incorporated polyalkylene glycol, paraffin wax, or fatty acid ester of polyhydric alcohol is, relative to 100 parts by weight of polyacetal copolymer (A) component, preferably 0.01 to 5 parts by weight, more preferably 0.01 to 3 parts by weight.

In the polyacetal resin composition of the present invention, for the purpose of improving the shaping properties or shortening the shaping cycle, a nucleating agent may be added. With respect to the nucleating agent, there is no

particular limitation, but, for example, more preferred are boron nitride, hydrated magnesium silicate, and three-dimensionally crosslinked polyacetal. The amount of the nucleating agent incorporated is, relative to 100 parts by weight of polyacetal copolymer (A) component, preferably 0.0001 to 10.0 parts by weight, more preferably 0.001 to 5.0 parts by weight.

In the polyacetal resin composition of the present invention, as a fluorescent whitening agent, a coumarin fluorescent whitening agent or a benzoxazole fluorescent whitening agent may be added. As a coumarin fluorescent whitening agent and a benzoxazole fluorescent whitening agent, preferred are 3-(4'-acetylaminophenyl)-7-acetylaminocoumarin, 3-(4'-carboxyphenyl)-4-methyl-7-diethylaminocoumarin, 2,5-bis(5'-t-butylbenzoxazol-2'-yl)thiophene, and 2,5-bis[5'-t-butylbenzoxazolyl(2)]thiophene. The amount of the coumarin fluorescent whitening agent or benzoxazole fluorescent whitening agent incorporated is, relative to 100 parts by weight of polyacetal copolymer (A) component, preferably 0.001 to 500 ppm by weight, more preferably 0.01 to 100 ppm by weight.

In the polyacetal resin composition of the present invention, in addition to the above-mentioned components, a known additive and/or filler can be added in such an amount that the effects of the present invention are not sacrificed. Examples of the additives include an antistatic agent, an ultraviolet light absorber, and a light stabilizer.

As a method for adding the stabilizers in the present invention, a general method can be employed in which four types of components as the stabilizers are added to polyacetal copolymer (A) component which has been subjected to polymerization termination treatment comprising a polymerization catalyst deactivator. For example, amine-substituted triazine compound (B), hindered phenol compound (C), and at least one metal-containing compound (E) selected from the group consisting of a hydroxide, an inorganic acid salt, and an alkoxide of an alkali metal or an alkaline earth metal are added and mixed into polyacetal copolymer (A), and then the resultant mixture is melt-kneaded by means of a single-screw or twin-screw extruder, and the mixture in the molten state is continuously introduced to a two-shaft, surface renewal-type horizontal kneader and subjected to vacuum devolatilization at a temperature of the melting point of the copolymer or higher to effect a stabilization treatment, obtaining a stabilization-treated polyacetal resin composition (hereinafter, referred to as "preliminary resin composition"). The obtained preliminary resin composition and hindered amine (D) are mixed together by means of, e.g., a tumbler blender, and heat melt-kneaded by means of, e.g., a single-screw or twin-screw extruder to obtain the polyacetal resin composition of the present invention.

As another method for adding hindered amine (D), there can be employed a method in which polyacetal copolymer (A) component which has been subjected to deactivation treatment for the polymerization, amine-substituted triazine compound (B), hindered phenol compound (C), metal-containing compound (E), and hindered amine (D) are mixed together by means of a Henschel mixer, and then the resultant mixture is molten by means of a twin-screw extruder, and the mixture in the molten state is continuously introduced to a two-shaft, surface renewal-type horizontal kneader and subjected to vacuum devolatilization at a temperature of the melting point of the copolymer or higher to effect a stabilization treatment.

As a method for adding hydrazide compound (F), a method is preferably employed in which to polyacetal copolymer (A), which has been subjected to deactivation treatment for the polymerization, are added the stabilizers, i.e., amine-substituted triazine compound (B), hindered phenol compound (C), hindered amine (D), and metal-containing compound (E) to effect a stabilization treatment, obtaining a preliminary polyacetal resin composition in which the loss in weight on heating is 0.6% or less, and hydrazide compound (F) is mixed with the obtained preliminary polyacetal resin composition and heat melt-kneaded by the above-mentioned method. Hydrazide compound (F) is more preferably heat melt-kneaded with the preliminary polyacetal resin composition in which the loss in weight on heating is 0.5% or less, further preferably with the preliminary polyacetal resin composition in which the loss in weight on heating is 0.4% or less. The loss in weight on heating is determined from the weight (M1) of pellets dried under atmospheric pressure at 100°C for 30 minutes and the weight (M2) obtained by placing the above pellets in a test tube and purging the tube with nitrogen gas and then heating the pellets under a reduced pressure of 1,333 Pa at 222°C for 2 hours, wherein the loss in weight is represented by the formula: $(M1 - M2)/M1 \times 100$. The higher the thermal stability of a sample, the lower the above value of the sample.

As another method for adding hydrazide compound (F), there can be employed a method in which polyacetal copolymer (A) component which has been subjected to deactivation treatment for the polymerization, the stabilizers including amine-substituted triazine compound (B), hindered phenol compound (C), hindered amine (D), and metal-containing compound (E), and hydrazide compound (F) are mixed together by means of a Henschel mixer, and then the resultant mixture is molten by means of a twin-screw extruder, and the mixture in the molten state is continuously introduced to a two-shaft, surface renewal-type horizontal kneader and subjected to vacuum devolatilization at a temperature of the melting point of the copolymer or higher to effect a stabilization treatment.

A shaped article can be obtained from the polyacetal resin composition of the present invention in accordance with a known fabrication method for a polyacetal resin. As examples of shaped articles obtained from the resin composition of the present invention, there can be mentioned stocks, such as pellets, a rod, and a board, a sheet, a tube, various types of containers, and mechanical, electric, automobile, building, and other various parts, but the shaped article is not limited to those mentioned above.

The polyacetal resin composition of the present invention has excellent resistance to moisture and heat, and therefore is extremely advantageously used as a material required to have high resistance to moisture and heat, for example, as a material for sanitary products used in, e.g., a bathroom or lavatory, parts for water-related use or moist-heat resistant shaped parts used in devices for water-related use, and anti-freeze resistive shaped parts for use in, e.g., an automobile radiator tank. In addition, the polyacetal resin composition is advantageous in that the amount of formaldehyde generated from pellets and a shaped article comprising the polyacetal resin composition is markedly reduced, and therefore is unlikely to cause the working atmosphere for producing a shaped article to be poor. Particularly, as a method for preventing a so-called sick building syndrome, the polyacetal resin composition is advantageously used as a material for automobile interior parts, building parts used in, e.g., house and school buildings, and electric parts. Further, the polyacetal resin composition suppresses the amount of formaldehyde dissolved in water or hot water, and therefore is advantageously used as a material for water-related use and a material for, e.g., food or medical equipment and containers.

EXAMPLES

Hereinbelow, the present invention will be described in more detail with reference to the following Examples and Comparative Examples, which should not be construed as limiting the scope of the present invention. The terms and methods for measurement in the following Examples and Comparative Examples are described below.

<Synthesis Example 1: Method for producing polyacetal copolymer (A)>

To a two-shaft continuous polymerizer having a self-cleaning paddle and having a jacket set at a temperature of 65°C were added 100 parts by weight of trioxane and 4 parts by weight of 1,3-dioxolane, and to the monomers were continuously added a solution of boron trifluoride diethyl etherate in benzene as a catalyst so that the amount of the catalyst became 0.05 mmol relative to 1 mol of the total of the monomers and a solution of methylal in benzene as a molecular weight modifier so that the amount of methylal became 500 ppm, based on the total of the monomers, and a polymerization was continuously conducted so that the residence time became 20 minutes.

To the formed polymer was added a solution of triphenylphosphine in benzene so that the amount of triphenylphosphine became 2 mol relative to 1 mol of the boron trifluoride diethyl etherate used to deactivate the catalyst, followed by pulverization, thus obtaining component (A). With respect to the obtained polymer, the yield was 99%, the melt index (MI) was 10.5 g/10 minutes, and the formate end-group content was 15 μmol/g-POM.

<Synthesis Examples 2 and 3: Method for producing polyacetal copolymer (A)>

Polyacetal copolymers (A) having different comonomer amounts were prepared as follows. To 100 parts by weight of trioxane was added 1 part by weight and 13 parts by weight of 1,3-dioxolane respectively, and to the monomers were continuously added a solution of boron trifluoride diethyl etherate in benzene as a catalyst so that the amount of the catalyst became 0.04 mmol and 0.05 mmol respectively relative to 1 mol of the total of the monomers and a solution of methylal in benzene as a molecular weight modifier so that the amount of methylal became 650 ppm and 0 ppm respectively, based on the total of the monomers, and a polymerization was continuously conducted so that the residence time became 20 minutes. The melt index (MI) was 10.0 to 11.0 g/minute, which conforms to that in Synthesis Example 1.

<Synthesis Examples 4 to 7: Method for producing polyacetal copolymer (A)>

Polyacetal copolymers (A) having different formate end-group contents were individually prepared in substantially the same manner as in Synthesis Example 1 except that the amount of the catalyst was changed. The residence time was 20 minutes, which is the same as that in Synthesis Example 1. Specifically, by reducing the catalyst amount, component (A) having a reduced formate end-group content can be obtained, and by increasing the catalyst amount, component (A) having an increased formate end-group content can be obtained. Specifically, the catalyst amounts in Synthesis Examples 4 to 7 are shown in Table 3 below. The melt index (MI) was 10.0 to 11.0 g/minute, which conforms to that in Synthesis Example 1.

<Examples 1 to 16 and Comparative Examples 1 to 5>

100 Parts by weight of polyacetal copolymer (A) obtained in each Synthesis Example and the components having the formulation shown in Tables 1, 2, and 3 were mixed together by means of a Henschel blender. Then, the resultant mixture was introduced into a same-directional twin-screw extruder (manufactured by The Japan Steel Works, Ltd.; inner diameter: 69 mm; L/D = 31.5) at 60 kg/hour, and the polyacetal composition was molten at 220°C in a vent

portion under a reduced pressure of 20 kPa, and continuously introduced to a two-shaft, surface renewal-type horizontal kneader (having an effective inner capacity of 60 L: which is a volume obtained by subtracting the volume occupied by the agitating blade from the whole inner capacity). The level of the molten composition was controlled so that the residence time in the two-shaft, surface renewal-type horizontal kneader became 25 minutes, and, while performing vacuum devolatilization at 220°C under a reduced pressure of 20 kPa, the molten composition was continuously withdrawn by a gear pump and pelletized to obtain a polyacetal resin composition.

Using the sample obtained by the above-mentioned method, a resistance to moisture and heat and hue of a shaped article and a formate end-group content of the polyacetal resin composition were evaluated by the methods described below. The results are shown in Tables 1,2, and 3.

<Evaluation method>

(a) Measurement of an oxyalkylene unit amount

Oxyalkylene unit amount: Mol of oxyalkylene units having 2 or more carbon atoms and constituting the polyacetal copolymer was measured as follow. 10 g of the polyacetal copolymer was added to 100 ml of a 3 N aqueous HCl solution and heated in a sealed container at 120°C for 2 hours to effect decomposition. After cooling, the amounts of alkylene glycol, dialkylene glycol, and trialkylene glycol in the resultant aqueous solution were measured by gas chromatography (FID) to determine the amount of the oxyalkylene units expressed in mol per 100 mol of the oxymethylene units of the polyacetal copolymer.

(b) Measurement of a polymerization yield

Polymerization yield: 20 g of polyacetal copolymer (A), which had been subjected to deactivation treatment for the catalyst, was immersed in 20 ml of acetone, and then subjected to filtration. The collected solids were washed with acetone 3 times, and then subjected to vacuum drying at 60°C until the dried solids had a constant weight, and then accurately weighed. A polymerization yield was determined by the following formula.

$$\text{Polymerization yield} = (M1/M0) \times 100$$

(Wherein M0 is the weight before the acetone treatment, and M1 is the dry weight after the acetone treatment.)

(c) Measurement of a formate end-group content

Formate end-group content: The polyacetal resin composition before the pressure cooker test was dissolved in HFIP (d2) and subjected to end-group content analysis by NMR which is a method generally used for analysis. The formate end-group content is expressed in mol of the formate end-group amount per g of the polyacetal copolymer, and uses a unit of μmol/g-POM.

(d) Evaluation of productivity

Productivity: The rating ◎ indicates that a stable operation is possible, the rating ○ indicates that an operation is possible, and the rating × indicates that an operation is difficult.

(e) Test conditions for resistance to moisture and heat

Molding of a test specimen: The polyacetal resin composition obtained in Example or Comparative Example was predried at 80°C for 3 hours, and subjected to molding in accordance with the method described in ISO 294-1 to obtain a test specimen, and the test specimen obtained after molding was subjected to conditioning in a room at a temperature of 23 ± 2°C and a relative humidity of 50 ± 5% for 48 hours or more.

Pressure cooker test: A test specimen was treated by means of a pressure cooker testing apparatus (model LBS-325, manufactured by Tomy Seiko Co., Ltd.) at 121°C under 2 atm. for 250 hours, and then subjected to conditioning in a room at a temperature of 23 ± 2°C and a relative humidity of 50 ± 5% for 48 hours or more, and the resultant specimen was used in a test for tensile properties and evaluation of hue.

(f) Test for tensile properties

In accordance with the methods described in ISO 527-1 and ISO 527-2, a tensile elongation at break (between gages) and a tensile strength (at yield point) were measured under conditions such that the measurement temperature was 23°C, the distance between chucks was 50 mm, and the rate of pulling was 50 mm/minute. A tensile strength retention ratio and a tensile elongation retention ratio were determined by the following formulae.

$$\text{Tensile strength retention ratio} = (\text{Tensile strength after pressure cooker test}/\text{Tensile strength before pressure cooker test}) \times 100$$

$$\text{Tensile elongation retention ratio} = (\text{Tensile elongation at break after pressure cooker test}/\text{Tensile elongation at break before pressure cooker test}) \times 100$$

(g) Evaluation of hue

Evaluation of hue: The test specimen obtained after the pressure cooker test was subjected to measurement using a spectral color difference meter (SE-2000, manufactured by Nippon Denshoku Industries Co., Ltd.), and a b value resulting from the measurement was used as hue of the shaped article. The larger the b value of a shaped article, the more yellowish the shaped article.

(h) Evaluation of an amount of formaldehyde generated

An amount of formaldehyde generated was measured as follows. The polyacetal resin composition obtained in Example or Comparative Example was predried at 80°C for 3 hours, and subjected to molding using molding machine SAV-30-30, manufactured by Sanjo Seiki Co., Ltd., at a cylinder temperature of 215°C to obtain a disc having a diameter of 50 mm and a thickness of 3 mm as a test specimen. After a lapse of one day from the molding, with respect to the resultant specimen, an amount of formaldehyde generated was measured in accordance with the method described in German Automobile Industry Association standards VDA 275 (quantitative determination of an amount of formaldehyde emission by the automobile interior parts - revised flask method).

1) 50 ml of distilled water is placed in a polyethylene container, and a specimen is hung above the water in the container, and the container is sealed with a cover and kept it sealed at 60°C for 3 hours.
2) Then, the container is allowed to stand at room temperature for 60 minutes, and then the specimen is removed from the container.
3) A concentration of formaldehyde absorbed in the distilled water in the polyethylene container is measured by an acetylacetone colorimetric method using a UV spectrometer.

An amount of formaldehyde generated after moistening was measured as follows. The polyacetal resin composition obtained in Example or Comparative Example was subjected to conditioning using a thermostatic chamber (PR-2K, manufactured by Tabai Espec Corp.) in a 98% RH atmosphere at 80°C for 24 hours, and then an amount of formaldehyde generated was measured in the same manner as mentioned above.

An amount of formaldehyde generated from a specimen in hot water was measured, using a test specimen obtained in the same manner as in the above-mentioned evaluation of an amount of formaldehyde generated, in accordance with the following procedure.

1) 100 ml of distilled water is placed in a polyethylene container, and a specimen is immersed in the water in the container, and the container is sealed with a cover and kept it sealed at 85°C for 24 hours.
2) Then, the container is allowed to stand at room temperature for 60 minutes, and then the specimen is removed from the container.
3) A concentration of formaldehyde absorbed in the distilled water in the polyethylene container is measured by an acetylacetone colorimetric method using a UV spectrometer.

[Table 1]

| | | Example 1 | Example 2 | Example 3 | Example 4 | Example 5 | Example 6 | Example 7 | Example 8 |
|---|---|---|---|---|---|---|---|---|---|
| Polyacetal copolymer | Part(s) by weight | Synthesis Example 1 100 | Synthesis Example 1 100 | Synthesis Example 1 100 | Synthesis Example 1 100 | Synthesis Example 1 100 | Synthesis Example 1 100 | Synthesis Example 1 100 | Synthesis Example 1 100 |
| Comonomer amount | Part(s) by weight | 4 | 4 | 4 | 4 | 4 | 4 | 4 | 4 |
| Oxyalkylene unit amount ※1 | mol | 1.6 | 1.6 | 1.6 | 1.6 | 1.6 | 1.6 | 1.6 | 1.6 |
| Polymerization catalyst | mmol /mol-TOX | 0.05 | 0.05 | 0.05 | 0.05 | 0.05 | 0.05 | 0.05 | 0.05 |
| Polymerization yield | % | 99 | 99 | 99 | 99 | 99 | 99 | 99 | 99 |
| Formate end-group content | μmol/ g-POM | 15 | 15 | 15 | 15 | 15 | 15 | 15 | 15 |
| Productivity | - | ◎ | ◎ | ◎ | ◎ | ◎ | ◎ | ◎ | ◎ |
| Amine-substituted triazine | Part(s) by weight | 0.05 | 0.05 | 0.05 | 0.05 | 0.05 | 0.05 | 0.05 | 0.05 |
| Hindered phenol compound | Part(s) by weight | 0.3 | 0.3 | 0.3 | 0.3 | 0.3 | 0.3 | 0.3 | 0.3 |
| Hindered amine (Tinuvin 765) | Part(s) by weight | 0.001 | 0.012 | 0.024 | 0.100 | 0.012 | 0.012 | 0.012 | 0.012 |
| Metal-containing compound | Part(s) by weight | 0.001 | 0.001 | 0.001 | 0.001 | 0.002 | 0.0045 | 0.002 | 0.002 |
| Hydrazide compound | Part(s) by weight | - | - | - | - | - | - | 0.08 | 0.50 |
| Tensile strength retention ratio ※2 | % | 40 | 50 | 65 | 85 | 71 | 85 | 71 | 69 |
| Tensile elongation retention ratio ※2 | % | 9 | 10 | 18 | 33 | 20 | 31 | 20 | 21 |
| b value ※2 | - | -1.2 | -1.7 | -1.9 | -2.0 | -2.1 | -4.5 | -2.1 | -1.8 |

(continued)

| | | Example 1 | Example 2 | Example 3 | Example 4 | Example 5 | Example 6 | Example 7 | Example 8 |
|---|---|---|---|---|---|---|---|---|---|
| Polyacetal copolymer | Part(s) by weight | Synthesis Example 1 100 | Synthesis Example 1 100 | Synthesis Example 1 100 | Synthesis Example 1 100 | Synthesis Example 1 100 | Synthesis Example 1 100 | Synthesis Example 1 100 | Synthesis Example 1 100 |
| Amount of formaldehyde generated | μg/ g-POM | 11 | 11 | 11 | 10 | 12 | 14 | 5 | 3 |
| Amount of formaldehyde generated (After moistening) | μg/ g-POM | 20 | 20 | 19 | 18 | 28 | 55 | 11 | 8 |
| Amount of formaldehyde generated (In hot water) | μg/ g-POM | 120 | 119 | 116 | 115 | 124 | 138 | 89 | 78 |

<Description of terms and compounds shown in Table>

※ 1: Mol per 100 mol of oxymethylene units of polyacetal copolymer

※2: After pressure cooker test for 250 hours Amine-substituted triazine: Melamine Hindered phenol compound: Triethylene glycol bis[3-(3-t-butyl-5-methyl-4-hydroxyphenyl)propionate] Hindered amine: Bis(1,2,2,6,6-pentamethyl-4-piperidyl) sebacate Metal-containing compound: Magnesium hydroxide Hydrazide compound: Dodecanedioic dihydrazide

[Table 2]

| | | Comparative example 1 | Comparative example 2 | Comparative example 3 | Comparative example 4 | Comparative example 5 |
|---|---|---|---|---|---|---|
| Polyacetal copolymer | Part(s) by weight | Synthesis Example 1 100 | Synthesis Example 1 100 | Synthesis Example 1 100 | Synthesis Example 1 100 | Synthesis Example 1 100 |
| Comonomer amount | Part(s) by weight | 4 | 4 | 4 | 4 | 4 |
| Oxyalkylene unit amount ※1 | mol | 1.6 | 1.6 | 1.6 | 1.6 | 1.6 |
| Polymerization catalyst | mmol /mol-TOX | 0.05 | 0.05 | 0.05 | 0.05 | 0.05 |
| Polymerization yield | % | 99 | 99 | 99 | 99 | 99 |
| Formate end-group content | μmol/ g-POM | 15 | 15 | 15 | 15 | 15 |
| Productivity | - | ◎ | ◎ | ◎ | ◎ | ◎ |
| Amine-substituted triazine | Part(s) by weight | 0.05 | 0.05 | 0.05 | 0.05 | 0.05 |
| Hindered phenol compound | Part(s) by weight | 0.3 | 0.3 | 0.3 | 0.3 | 0.3 |
| Hindered amine (Tinuvin 765) | Part(s) by weight | 0 | 0.001 | 0.012 | 0.100 | 0.012 |
| Metal-containing compound | Part(s) by weight | 0 | 0 | 0.010 | 0.010 | 0.050 |
| Tensile strength retention ratio ※2 | % | 19 | 30 | 82 | 94 | 36 |
| Tensile elongation retention ratio ※2 | % | 4 | 7 | 35 | 39 | 7 |
| b value ※2 | - | -1.1 | -1.4 | -2.2 | -0.2 | 8.7 |
| Amount of formaldehyde generated | μg/ g-POM | 11 | 11 | 11 | 17 | 29 |
| Amount of formaldehyde generated (After moistening) | μg/ g-POM | 20 | 20 | 70 | 70 | 115 |
| Amount of formaldehyde generated (In hot water) | μg/ g-POM | 120 | 119 | 165 | 159 | 331 |

<Description of terms and compounds shown in Table>

※ 1: Mol per 100 mol of oxymethylene units of polyacetal copolymer

※2: After pressure cooker test for 250 hours Amine-substituted triazine: Melamine Hindered phenol compound: Triethylene glycol bis[3-(3-t-butyl-5-methyl-4-hydroxyphenyl)propionate] Hindered amine: Bis(1,2,2,6,6-pentamethyl-4-piperidyl) sebacate Metal-containing compound: Magnesium hydroxide

[Table 3]

| | | Example 5 | Example 9 | Example 10 | Example 11 | Example 12 | Example 13 | Example 14 | Example 15 | Example 16 |
|---|---|---|---|---|---|---|---|---|---|---|
| Polyacetal copolymer | Part(s) by weight | Synthesis Example 1 100 | Synthesis Example 4 100 | Synthesis Example 5 100 | Synthesis Example 2 100 | Synthesis Example 3 100 | Synthesis Example 1 100 | Synthesis Example 1 100 | Synthesis Example 6 100 | Synthesis Example 7 100 |
| Comonomer amount | Part(s) by weight | 4 | 4 | 4 | 1 | 13 | 4 | 4 | 4 | 4 |
| Oxyalkylene unit amount ※1 | mol | 1.6 | 1.6 | 1.6 | 0.4 | 5.0 | 1.6 | 1.6 | 1.6 | 1.6 |
| Polymerization catalyst | mmol /mol-TOX | 0.05 | 0.06 | 0.02 | 0.04 | 0.05 | 0.05 | 0.05 | 0.08 | 0.01 |
| Polymerization yield | % | 99 | 99 | 80 | 99 | 99 | 99 | 99 | 99 | 70 |
| Formate end-group content | µmol/ g-POM | 15 | 25 | 5 | 13 | 17 | 15 | 15 | 35 | 2 |
| Productivity | - | ◎ | ◎ | ○ | ◎ | ○ | ◎ | ◎ | ○ | × |
| Amine-substituted triazine | Part(s) by weight | 0.05 | 0.05 | 0.05 | 0.05 | 0.05 | 0.05 | 0.05 | 0.05 | 0.05 |
| Hindered phenol compound | Part(s) by weight | 0.3 | 0.3 | 0.3 | 0.3 | 0.3 | 0.3 | 0.3 | 0.3 | 0.3 |
| Hindered amine ※3 | | | | | | | | | | |
| Tinuvin 765 | Part(s) by weight | 0.012 | 0.012 | 0.012 | 0.012 | 0.012 | | | 0.012 | 0.012 |
| Tinuvin 144 | Part(s) by weight | | | | | | 0.016 | | | |
| Tinuvin 622 | Part(s) by weight | | | | | | | 0.084 | | |
| Metal-containing compound | Part(s) by weight | 0.002 | 0.002 | 0.002 | 0.002 | 0.002 | 0.002 | 0.002 | 0.002 | 0.002 |
| Tensile strength retention ratio ※2 | % | 71 | 61 | 80 | 85 | 70 | 71 | 70 | 42 | 85 |

(continued)

| | | Example 5 | Example 9 | Example 10 | Example 11 | Example 12 | Example 13 | Example 14 | Example 15 | Example 16 |
|---|---|---|---|---|---|---|---|---|---|---|
| Polyacetal copolymer | Part(s) by weight | Synthesis Example 1 100 | Synthesis Example 4 100 | Synthesis Example 5 100 | Synthesis Example 2 100 | Synthesis Example 3 100 | Synthesis Example 1 100 | Synthesis Example 1 100 | Synthesis Example 6 100 | Synthesis Example 7 100 |
| Tensile elongation retention ratio ※2 | % | 20 | 18 | 23 | 25 | 19 | 12 | 13 | 7 | 24 |
| b value ※2 | - | -2.1 | -1.9 | -2.4 | -2.5 | -2.2 | -2.0 | -2.1 | -0.9 | -2.6 |
| Amount of formaldehyde generated | μg/ g-POM | 12 | 14 | 8 | 10 | 13 | 12 | 12 | 21 | 7 |
| Amount of formaldehyde generated (After moistening) | μg/ g-POM | 28 | 33 | 11 | 25 | 31 | 30 | 30 | 44 | 10 |
| Amount of formaldehyde generated (In hot water) | μg/ g-POM | 124 | 127 | 82 | 122 | 126 | 125 | 122 | 134 | 79 |

<Description of terms and compounds shown in Table>

※ 1: Mol per 100 mol of oxymethylene units of polyacetal copolymer

※2: After pressure cooker test for 250 hours

※3: Added in equimolar amount to Tinuvin 765 0.012 phr Amine-substituted triazine: Melamine Hindered phenol compound: Triethylene glycol bis[3-(3-t-butyl-5-methyl-4-hydroxyphenyl)propionate] Tinuvin 765: Bis(1,2,2,6,6-pentamethyl-4-piperidyl) sebacate Tinuvin 144: Bis(1,2,2,6,6-pentamethyl-4-piperidyl) 2-(3,5-di-t-butyl-4-hydroxybenzyl)-2-N-butylmalonate Tinuvin 622: Polycondensation product of dimethyl succinate and 1-(2-hydroxyethyl)-4-hydroxy-2,2,6,6-tetramethylpiperidine Metal-containing compound: Magnesium hydroxide

## Claims

1. A polyacetal resin composition comprising 100 parts by weight of (A) a polyacetal copolymer, wherein the amount of oxyalkylene units having 2 or more carbon atoms contained in the polyacetal copolymer is, per 100 mol of oxymethylene units of the polyacetal copolymer, 0.4 to 17.0 mol, relative to 100 parts by weight of the polyacetal copolymer (A), 0.01 to 1.0 parts by weight of (B) an amine-substituted triazine compound, 0.01 to 5.0 parts by weight of (C) a hindered phenol, 0.001 to 3.0 parts by weight of (D) a hindered amine, and 0.001 to less than 0.005 parts by weight of (E) magnesium hydroxide.

2. The polyacetal resin composition according to claim 1, wherein 0.001 to 0.2 parts by weight of the hindered amine (D) and 0.001 to 0.003 parts by weight of (E) magnesium hydroxide are incorporated.

3. The polyacetal resin composition according to claim 1 or 2, wherein the hindered amine (D) has a partial structure represented by the following formula (1) or (2):

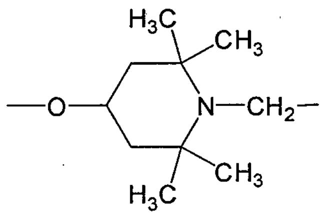

(1)

,

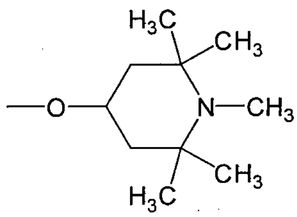

(2)

.

4. The polyacetal resin composition according to any one of claims 1 to 3, wherein the polyacetal copolymer (A) has a formate end-group content of 5 to 25 μmol/g-POM.

5. The polyacetal resin composition according to any one of claims 1 to 4, which further

6. A shaped article obtained by shaping the polyacetal resin composition according to any one of claims 1 to 5.

7. The shaped article according to claim 6, which is a shaped part for water-related use or a moist-heat resistant shaped part.

## Patentansprüche

1. Polyacetalharzzusammensetzung, umfassend 100 Gewichtsteile von (A) einem Polyacetalcopolymer, wobei die Menge von Oxyalkyleneinheiten mit 2 oder mehr Kohlenstoffatomen, enthalten in dem Polyacetalcopolymer, pro 100 mol Oxymethyleneinheiten des Polyacetalcopolymers, 0,4 bis 17,0 mol beträgt, relativ zu 100 Gewichtsteilen des Polyacetalcopolymers (A), 0,01 bis 1,0 Gewichtsteile von (B) einer aminsubstituierten Triazinverbindung, 0,01 bis 5,0 Gewichtsteile von (C) einem gehinderten Phenol, 0,001 bis 3,0 Gewichtsteile von (D) einem gehinderten Amin und 0,001 bis weniger als 0,005 Gewichtsteile von (E) Magnesiumhydroxid.

2. Polyacetalharzzusammensetzung nach Anspruch 1, wobei 0,001 bis 0,2 Gewichtsteile des gehinderten Amins (D) und 0,001 bis 0,003 Gewichtsteile von (E) Magnesiumhydroxid eingebunden sind.

3. Polyacetalharzzusammensetzung nach Anspruch 1 oder 2, wobei das gehinderte Amin (D) eine Teilstruktur, dargestellt durch die nachstehende Formel (1) oder (2), aufweist:

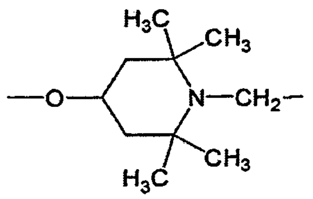

(1)

,

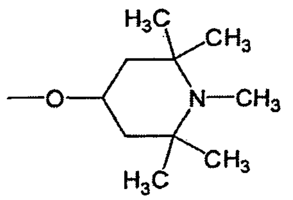

(2)

.

4. Polyacetalharzzusammensetzung nach einem der Ansprüche 1 bis 3, wobei das Polyacetalcopolymer (A) einen Formiatendgruppengehalt von 5 bis 25

5. Polyacetalharzzusammensetzung nach einem der Ansprüche 1 bis 4, welche weiter 0,01 bis 0,5 Gewichtsteile von (F) einer Hydrazidverbindung umfasst.

6. Formkörper, erhalten durch Formen der Polyacetalharzzusammensetzung nach einem der Ansprüche 1 bis 5.

7. Formkörper nach Anspruch 6, welcher ein Formteil für wasserbezogene Verwendung oder ein feuchtwärmebeständiges Formteil ist.

## Revendications

1. Composition de résine de polyacétal comprenant 100 parties en poids de (A) un copolymère polyacétal, où la quantité d'unités oxyalkylène ayant 2 atomes de carbone ou plus présente dans le copolymère polyacétal se situe par 100 moles d'unités oxyméthylène du copolymère polyacétal, dans l'intervalle allant de 0,4 à 17,0 moles, par rapport à 100 parties en poids du copolymère polyacétal (A), 0,01 à 1,0 parties en poids de (B) un composé triazine substitué par une amine, 0,01 à 5 parties en poids de (C) un phénol encombré, 0,001 à 3,0 parties en poids de (D) une amine encombrée, et 0,001 à moins de 0,005 partie en poids de (E) l'hydroxyde de magnésium.

2. Composition de résine de polyacétal selon la revendication 1, où 0,001 à 0,2 partie en poids de l'amine encombrée (D) et 0,001 à 0,003 partie en poids de (E) l'hydroxyde de magnésium sont incorporés.

3. Composition de résine de polyacétal selon la revendication 1 ou 2, où l'amine encombrée (D) présente une structure partielle représentée par la formule (1) ou (2) :

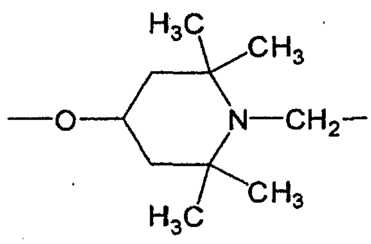

(1)

,

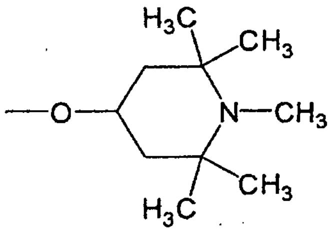

(2)

4. Composition de résine de polyacétal selon l'une quelconque des revendications 1 à 3, où le copolymère polyacétal (A) possède une teneur en groupe terminal formiate allant de 5 à 25 μmoles/g-POM.

5. Composition de résine de polyacétal selon l'une quelconque des revendications 1 à 4, qui comprend en outre, 0,01 à 0,5 partie en poids de (F) un composé hydrazide.

6. Article façonné obtenu par mise en forme de la composition de résine de polyacétal selon l'une quelconque des revendications 1 à 5.

7. Article façonné selon la revendication 6, qui est un élément façonné à utiliser en présence d'eau ou un élément façonné résistant à la chaleur humide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006111874 A
- JP 2005220254 A